## Europäisches Patentamt

## European Patent Office

## Office européen des brevets

(11) Veröffentlichungsnummer: **0 103 685 B1**

(12) **EUROPÄISCHE PATENTSCHRIFT**

(45) Veröffentlichungstag der Patentschrift:
24.08.88

(21) Anmeldenummer: **83106176.7**

(22) Anmeldetag: **24.06.83**

(51) Int. Cl.⁴: **A 01 K 63/04**

(54) **Versorgungsgerät für die Anreicherung von Aquariumwasser mit CO2-gas.**

(30) Priorität: **29.06.82 DE 3224149**

(43) Veröffentlichungstag der Anmeldung:
**28.03.84 Patentblatt 84/13**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**DE - A - 2 830 260**
**DE - B - 1 642 474**
**DE - C - 186 865**
**DE - C - 190 305**
**US - A - 2 824 728**
**US - A - 3 770 128**

(73) Patentinhaber: **Tetra Werke Dr.rer.nat. Ulrich Baensch GmbH, Herrenteich 78, D-4520 Melle 1 (DE)**

(72) Erfinder: **Richter, Arno, Johannes-Strasse 82, D-4500 Osnabrück (DE)**

(74) Vertreter: **Mansmann, Ivo, c/o Gödecke AG - Patentabteilung Postfach 569 - Mooswaldallee 1-9, D-7800 Freiburg (DE)**

ACTORUM AG

## Beschreibung

Aus der DE-AS 1 642 474 ist es bekannt, dass es bei der Haltung von Pflanzen und Tieren im Aquarium vorteilhaft ist, wenn das Aquariumwasser ständig mittels $CO_2$-Gas begast wird.

Es ist vorteilhaft, wenn die Begasung dadurch bewirkt wird, dass das $CO_2$-Gas über eine Kontaktfläche in das Aquariumwasser eindiffundiert.

Es ist festgestellt worden, dass bei richtiger Dosierung des $CO_2$-Gases nicht nur die Aquariumpflanzen gut gedeihen, sondern die Erhöhung des Sauerstoffgehalts des Aquariumwassers durch die gesteigerte Assimilation der Pflanzen auch die Lebensbedingungen für Sauerstoff verbrauchende Organismen erheblich verbessert. Wesentlich ist hierbei, dass die Diffusionsgeschwindigkeit von $CO_2$ immer richtig eingestellt ist.

Da grössere Aquarien auch eine grosse Kontaktfläche, über die das $CO_2$-Gas in das Aquariumwasser eindiffundieren kann, benötigen, um eine ausreichende Diffusionsgeschwindigkeit sicherzustellen, ist schon in der DE-AS 1 642 474 versucht worden, eine solche Vergrösserung der Kontaktfläche über konstruktive Veränderungen der Begasungsvorrichtung zu erreichen. Hierbei werden aber rasch Dimensionen erreicht, die dazu zwingen, die Kontaktfläche entweder ausserhalb des Aquariums oder im Aquariengrund unterzubringen (Vgl. Fig. 4 und Fig. 6 der DE-AS 1 642 474).

Eine sehr viel Raum beanspruchende Vergrösserung der Kontaktfläche bei der Anreicherung des Wassers mit Sauerstoff in runden Fischbehältern ist auch in der DE-PS 186 865 beschrieben.

Aufgabe der vorliegenden Erfindung ist es nun, die Kontaktfläche, die für den Übertritt des $CO_2$-Gases in das Aquariumwasser notwendig ist, auf kleinstem Raum unterzubringen und diese so zu gestalten, dass die Diffusionsfläche und damit unter Normalbedingungen die Diffusionsgeschwindigkeit des $CO_2$-Gases unabhängig von der Füllung des das $CO_2$-Gas enthaltenen Raumes stets etwa gleich bleibt.

Gegenstand der Erfindung ist daher ein Versorgungsgerät für die Anreicherung von Aquariumwasser mit $CO_2$-Gas, bei dem mindestens zwei unten offene Behältnisse (2) so übereinander angeordnet sind, dass bei Einleitung von $CO_2$-Gas in das unterste Behältnis (2) das überlaufende $CO_2$-Gas vom darüber befindlichen Gefäss (2) nach Art einer pneumatischen Wanne auffangbar ist, dadurch gekennzeichnet, dass das $CO_2$-Gas durch ein im wesentlichen senkrecht anzuordnendes Gaseinleitungsrohr (1) in das unterste Behältnis (2) einleitbar ist und durch den unteren Rand eines durch die Wandung des unteren Behältnisses (2) dicht durchgeführten und in das darüber befindliche Behältnis (2) hineinragenden Überlaufrohres (3) die Grenzfläche Wasser/$CO_2$ im unteren Gefäss bestimmbar ist.

Man erhält somit übereinander auf kleinstem Raum angeordnet in Form einer Kaskade eine Anzahl von Diffusionsflächen, deren Summe auf das jeweilige Aquariumvolumen exakt abgestimmt werden kann.

Die Form und Anordnung der Behältnisse ist an sich unwichtig. Bevorzugt ist jedoch aus konstruktiven Gründen eine Form mit rechteckigem, insbesondere quadratischem oder kreisförmigem Querschnitt. Ebenfalls aus konstruktiven Gründen und für die Serienfertigung empfiehlt es sich, die Behältnisse alle gleich zu machen, damit nach dem Bausteinprinzip die Grösse der Anlage jederzeit variiert werden kann.

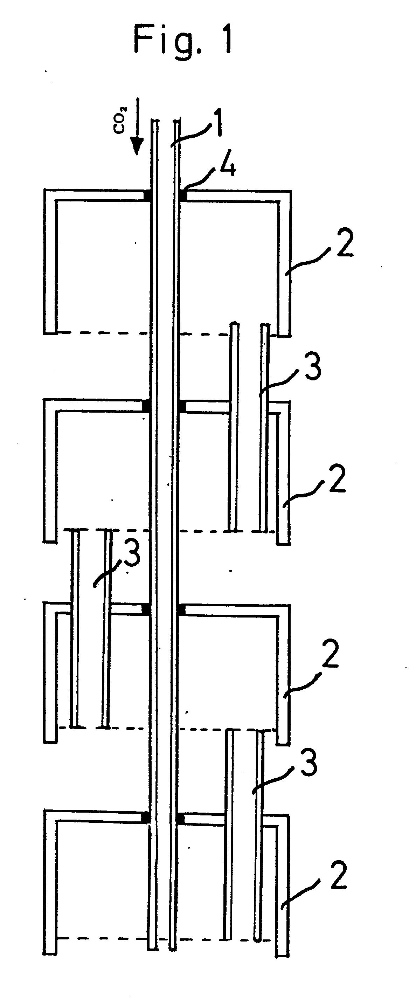

Bewährt hat sich eine Anordnung, wie sie in Figur 1 dargestellt ist. Zusammenfügbare Einzel-Behältnisse sind in Figur 2a und 2b dargestellt. Die Figur 3 veranschaulicht eine aus einzelnen Behältnissen zusammengesetzte Kaskade.

Das Zuleitungsrohr 1 ist zu den zylindrischen oder polyedrischen Behältern zentral angeordnet, so dass die einzelnen Behältnisse 2 über eine flexible Dichtung 4 in beliebiger Anzahl aufgeschoben werden können. Jedes Behältnis 2 ist mit einem dicht durch die Wandung geführtes Überlaufrohr 3 ausgestattet.

Das von oben in die mit Wasser gefüllte Vorrichtung eingeleitete $CO_2$-Gas füllt nun zunächst das unterste Behältnis 2 bis zum unteren Rand des Überlaufrohrs 3.

Das nun durch dieses Rohr entweichende $CO_2$ wird von dem oberhalb angeordneten Behältnis nach Art einer pneumatischen Wanne aufgefangen bis die Grenzfläche Wasser/$CO_2$-Gas wiederum am unteren Rand des Überlaufrohrs 3 angelangt ist.

Der Vorgang setzt sich nach oben fort, bis alle Behältnisse gefüllt sind. Überschüssiges $CO_2$ entweicht über den Rand des obersten Gefässes oder über ein Überlaufrohr 3, das über die Wasseroberfläche des Aquariums ragt.

Die Vorrichtung sollte je nach Grösse des Aquariums etwa 3–5 Behältnisse aufweisen, dies hat sich als günstiger Kompromiss im Hinblick auf die Grösse der Vorrichtung und die angestrebte hohe Diffusionsgeschwindigkeit herausgestellt. Die Gesamtfläche sollte so gewählt werden, dass sich im Aquarium eine Dauerkonzentration von 5–15 mg $CO_2$/Liter einstellt. Die Vorrichtung wird bevorzugt aus neutralem Kunststoff im Spritzgussverfahren hergestellt. Besonders geeignet ist Polystyrol und Celluloseacetat.

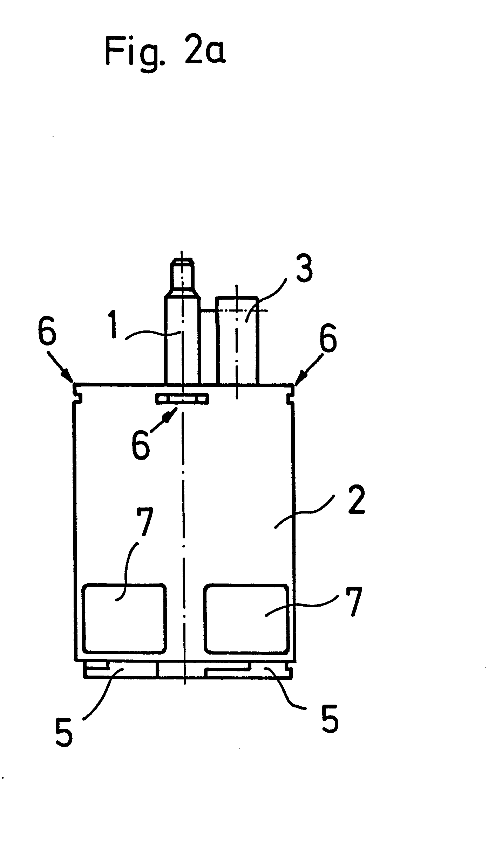

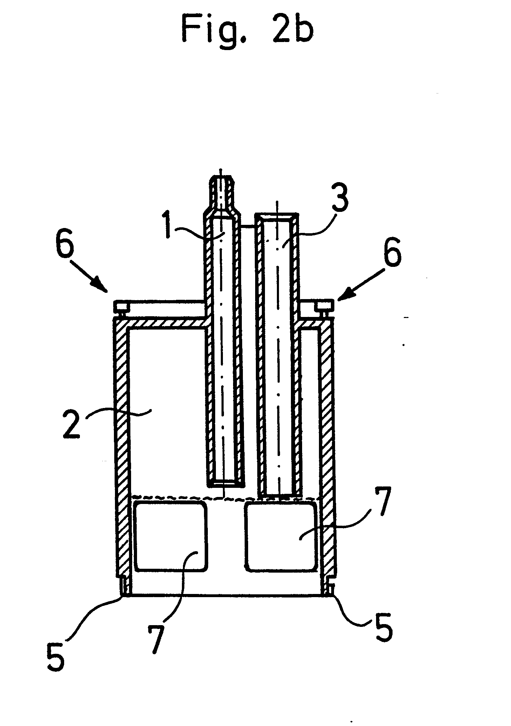

In Figur 2a/b ist eine weitere bevorzugte Ausführungsform beschrieben.

Figur 2a zeigt ein speziell für die Aneinanderreihung mehrerer Einheiten konstruiertes Behältnis 2 in der seitlichen Aufsicht. Das Zuleitungsrohr 1 ist an seinem oberen Teil so verjüngt, dass es in das Zuleitungsrohr des darüber anzuordnenden Behältnisses gasdicht eingeschoben werden kann. Das Überlaufrohr 3 ist seitlich neben dem Zuleitungsrohr 1 angebracht. Die Verbindung des Behältnisses 2 wird durch Eingriff eines Bajonettverschlusses 5 in entsprechende Ausnehmungen 6 des darunter befindlichen Behältnisses hergestellt. Es ist jedoch auch ein entsprechender Schraubverschluss mit Gewinde brauchbar. Für den ungehinderten Durchtritt des Aquariumwassers sind in der Wand des Behältnisses 2 mehrere Aussparungen 7 vorgesehen.

Figur 2b zeigt Figur 2a im Schnitt. Die sich ausbildende Grenzfläche $CO_2$/Wasser ist wenig über den Aussparungen 7 gestrichelt angedeutet.

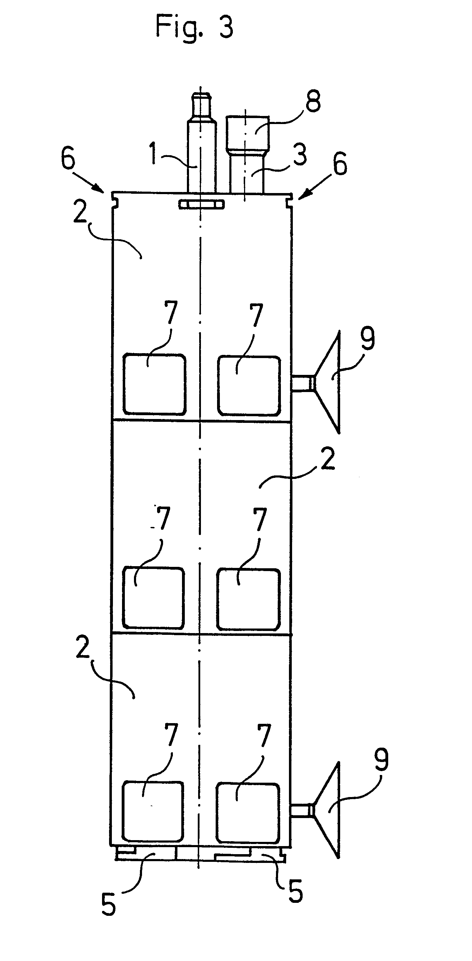

Fügt man mehrere Behältnisse 2 zu einer Kaskade zusammen, so erhält man einen formschönen zylindrischen Körper (Vgl. Figur 3).

Beim Aufstecken eines Behältnisses auf ein zweites wird durch Drehung bis zum Anschlag eine feste Verbindung hergestellt. Es ist zu beachten, dass für den Betrieb das Überlaufrohr 3 des obersten Behältnisses mit einer gasdichten Kappe 8 verschlossen werden muss, da das $CO_2$ sonst entweichen würde.

Die Bajonettverschlüsse sind so gestaltet, dass das Überlaufrohr beim Zusammenfügen der Behältnisse von Stufe zu Stufe jeweils um 180° versetzt werden kann.

Die Befestigung der Kaskade im Aquarium erfolgt durch Haftsauger 9, die zweckmässig zwischen den Aussparungen 7 der Behältnisse 2 angebracht werden können.

Für ein Aquarium mit 200 Liter Inhalt ist eine Kaskade von 4–5 Behältnissen 2 mit einem Durchmesser von 5 cm vorgesehen. Bei grösseren Aquarien kann der Durchmesser und/oder die Anzahl der Behältnisse je nach Wunsch erhöht werden.

Figur 3 zeigt die seitliche Aufsicht auf eine Kaskade mit 3 Behältnissen 2, einer Verschlusskappe 8 und Haftsaugern 9.

Zur leichteren Kontrolle der Funktion ist es vorteilhaft, die Vorrichtung aus durchsichtigem Kunststoff zu fertigen.

## Patentansprüche

1. Versorgungsgerät für die Anreicherung von Aquariumwasser mit $CO_2$-Gas, bei dem mindestens zwei unten offene Behältnisse (2) so übereinander angeordnet sind, dass bei Einleitung von $CO_2$-Gas in das unterste Behältnis (2) das überlaufende $CO_2$-Gas vom darüber befindlichen Gefäss (2) nach Art einer pneumatischen Wanne auffangbar ist, dadurch gekennzeichnet, dass das $CO_2$-Gas durch ein im wesentlichen senkrecht anzuordnendes Gaseinleitungsrohr (1) in das unterste Behältnis (2) einleitbar ist und durch den unteren Rand eines durch die Wandung des unteren Behältnisses (2) dicht durchgeführten und in das darüber befindliche Behältnis (2) hineinragenden Überlaufrohres (3) die Grenzfläche Wasser/$CO_2$ im unteren Gefäss bestimmbar ist.

2. Versorgungsgerät nach Anspruch 1, dadurch gekennzeichnet, dass die Behältnisse (2) einen rechteckigen Querschnitt aufweisen und die Durchführung des Gaseinleitungsrohrs (1) zentral angebracht ist.

3. Versorgungsgerät nach Anspruch 1 und 2, dadurch gekennzeichnet, dass die Behältnisse (2) aus durchsichtigem Kunststoff bestehen.

4. Versorgungsgerät nach Anspruch 1 bis 3, dadurch gekennzeichnet, dass mehrere Behältnisse (2) durch Bajonett- oder Schraubverschlüsse (6) miteinander verbunden sind, wobei die Wände der Behältnisse Ausnehmungen (7) für den Durchtritt des Aquariumwassers aufweisen.

5. Versorgungsgerät nach Anspruch 1 bis 4, dadurch gekennzeichnet, dass die Behältnisse aus klarem Polystyrol oder Celluloseacetat bestehen.

## Claims

1. Supply apparatus for enriching aquarium water with $CO_2$ gas, in which at least two vessels (2) open at the bottom are arranged one above the other in such a way that when introducing $CO_2$ gas into the bottom vessel (2) the overflowing $CO_2$ gas can be collected in the vessel (2) above in the manner of a pneumatic trough, characterised in that the $CO_2$ gas can be introduced into the bottom vessel (2) through a gas feed tube (1) to be arranged in substantially vertical manner and in that the boundary surface water/$CO_2$ in the lower vessel can be controlled through the lower edge of an overflow pipe (3) passing tightly through the wall of the lower vessel (2) and projecting into the vessel (2) above.

2. Supply apparatus according to claim 1, characterised in that the vessels (2) have a rectangular cross-section and that the opening for the gas feed tube (1) is provided centrally.

3. Supply apparatus according to claims 1 and 2, characterised in that the vessels (2) consist of transparent plastic.

4. Supply apparatus according to claims 1 to 3, characterised in that several vessels (2) are assembled by means of bayonet or screw closures (6), whereby the walls of the vessels have cut-outs (7) through which the aquarium water passes.

5. Supply apparatus according to claims 1 to 4, characterised in that the vessels consist of clear polystyrene or cellulose acetate.

## Revendications

1. Appareil d'enrichissement de l'eau d'un aquarium en $CO_2$ gazeux dans lequel au moins deux récipients (2) ouverts vers le bas sont disposés l'un au-dessus de l'autre de telle sorte que, lors de l'introduction de $CO_2$ gazeux dans le récipient (2) le plus bas, le trop-plein de $CO_2$ puisse être capté par le récipient se trouvant au-dessus de lui à la façon d'une vanne pneumatique, dispositif caractérisé en ce qu'une conduite (1) d'introduction de gaz sensiblement verticale permet d'introduire le $CO_2$ gazeux dans le récipient (2) le plus bas et en ce que l'interface eau/$CO_2$ est déterminée dans le récipient inférieur par la bordure inférieur d'un tube de trop-plein (3) traversant de façon étanche la paroi du récipient inférieur (2) et débouchant dans le récipient (2) se trouvant au-dessus de lui.

2. Appareil d'enrichissement selon la revendication 1, caractérisé en ce que les récipients (2) présentent une section carrée et le tuyau (1) d'introduction de gaz est disposé au centre du récipient.

3. Appareil d'enrichissement selon la revendication 1 ou 2, caractérisé en ce que les récipients (2) sont en plastique transparent.

4. Appareil d'enrichissement selon les revendications 1 à 3, caractérisé en ce que plusieurs récipients (2) sont reliés les uns aux autres par des fermetures à baïonnette et/ou à vis (6), les parois des récipients présentant des évidements (7) destinés au passage de l'eau de l'aquarium.

5. Appareil d'enrichissement selon les revendications 1 à 4, caractérisé en ce que les récipients sont en polystyrène ou en acétate de cellulose transparent.

# Fig. 1

# Fig. 2a

# Fig. 2b

# Fig. 3